# EUROPÄISCHE PATENTSCHRIFT

(11) **EP 1 605 324 B1**
(45) Veröffentlichungstag und Bekanntmachung des Hinweises auf die Patenterteilung: **14.05.2008**
(21) Anmeldenummer: 04013406.6
(22) Anmeldetag: 07.06.2004
(51) Int. Cl.: G05B 19/042

(54) **Verfahren und Vorrichtung zur Überwachung des Betriebszustands mindestens einer Komponente einer technischen Anlage**
Method and apparatus for monitoring the operating state of at least one component of a technical installation
Procédé et dispositif de données pour surveiller l'état de fonctionnement d'au moins un composant d'une installation technique

(43) Veröffentlichungstag der Anmeldung: 14.12.2005
(73) Patentinhaber: SIEMENS AKTIENGESELLSCHAFT, 80333 München (DE)
(72) Erfinder: Kunze, Ulrich, Dr., 91088 Bubenreuth (DE)

(56) Entgegenhaltungen:
- EP-A- 1 219 520
- WO-A-99/19781
- WO-A-99/54979
- DE-A- 19 856 289

## Beschreibung

Die Erfindung betrifft ein Verfahren und eine Vorrichtung zur Überwachung des Betriebszustands mindestens einer Komponente einer technischen Anlage, wobei während des Betriebs laufend Messdaten bezüglich der Komponente erfasst und als mit je einem Zeitstempel versehene Datensätze gespeichert werden bzw. sind.

Moderne technische Anlagen werden üblicherweise durch Automatisierungsgeräte gesteuert, wobei bei komplexeren technischen Anlagen zusätzlich ein zentrales Leitsystem vorhanden ist.

Die Komponenten der technischen Anlage werden dabei üblicherweise überwacht und diagnostiziert um deren Betriebsverhalten anhand von technischen Größen, wie beispielsweise Druck, Temperatur, Durchfluss oder auch Konzentrationen an chemischen Substanzen beurteilen zu können.

Eine Kombination mehrerer der vorgenannten Größen beschreibt dann zu einem bestimmten Zeitpunkt einen aktuellen Betriebszustand einer Anlagenkomponente oder auch der gesamten technischen Anlage.

Die verschiedenen während des Betriebs der Komponente oder der technischen Anlage auftretenden Betriebszustände werden üblicherweise zumindest klassifiziert in die Arten erlaubter und nicht erlaubter Betriebszustand.

Ein nicht erlaubter Betriebszustand liegt beispielsweise vor, wenn mindestens ein Messwert einer Anlagenkomponente einen vorgegebenen Grenzwert verletzt, wenn also beispielsweise ein vorgeschriebener maximaler Betriebsdruck oder eine maximale Betriebstemperatur überschritten werden.

Meist reicht jedoch eine einfache Unterscheidung in erlaubte und nicht erlaubte Betriebszustände nicht aus, um eine Gefährdung der technischen Anlage sicher festzustellen.

Das sofortige Auslösen einer Schutzeinrichtung mit Abschalten der betreffenden Anlagenkomponente oder der Anlage unmittelbar nach Auftreten der Grenzwertverletzung führt zu unnötig häufigen Anlagenstillständen, was nicht notwendig ist.

Um derartige unnötige Anlagenstillstände zu vermeiden, ist es bekannt, Messdaten aus dem Leitsystem auszukoppeln und offline mit speziellen Algorithmen zu analysieren, um zeitweilige Grenzwertverletzungen zu erkennen und ggf. Schutzmaßnahmen einleiten zu können.

Da eine derartige Überwachung jedoch nicht in Echtzeit erfolgt, kann dabei das Problem auftreten, dass infolge des Zeitversatzes zwischen Auskopplung und Anfall der genannten Messdaten und zugehöriger benötigter Auswertezeit notwendige Schutzmaßnahmen nur verspätet eingeleitet werden können, was zu einer Gefährdung der technischen Anlage führen kann.

Aus DE-A-198 56 289 ist eine Überwachungseinrichtung für Maschinen und Anlagen bekannt, die ein umfassendes Abbild des Maschinenzustandes liefert. Die Ergebnisse dienen Instandhaltungsmaßnahmen, deren Art und Zeitpunkt vom Zustand der Maschine abhängig gemacht werden kann. Modulare Messdatenerfassungsgeräte nehmen dabei ständig Messdaten auf, die von Sensoren geliefert werden. Die Messdaten werden dabei zuerst von den Geräten mit einem Zeitstempel versehen. Danach werden die Messwerte weiter berechnet und miteinander verknüpft, so dass geeignete Werte für den Istverlauf des Maschinenzustandes zwischengespeichert werden können. Auf diese Daten können ein Prozess-Leitrechner und ein PC zugreifen, mittels dem unter anderem der Istverlauf mit einer Sollwertkurve verglichen werden kann.

Herkömmliche Messverfahren beherrschen manchmal Integrationsverfahren beispielsweise bei der Ermittlung der Dauer eines elektrischen Impulses oder der Umdrehung eines rotierenden Maschinenteils, jedoch handelt es sich dabei fast immer um Kurzzeitgrößen im Sekundenbereich, wobei die betreffenden Größen physikalisch direkt gemessen werden können. So ist aus WO-A-99/54979 ein Verfahren zur Phasenausfallerkennung bei einer Asynchronmaschine bekannt, bei dem in einem zweiten Überwachungszustand die Dauer eines Auslösesignals mit dem überstrichenen Drehwinkel des Spannungsvektors in der gleichen Phase verglichen wird. Wenn während dieser Zeit der Zustand des Phasenstroms andauert, wird in eine dritte Überwachungsstufe geschaltet. In der dritten Überwachungsstufe wird die Dauer des Auslösesignals, also die Fortdauer des Phasenstromzustandes während eines definierten Verzögerungsintervalls überprüft. Überdauert das Auslösesignal das Verzögerungszeitintervall, wird Phasenausfall gemeldet.

Der Erfindung liegt daher die Aufgabe zugrunde, ein Verfahren und eine Vorrichtung zur Überwachung des Betriebszustands mindestens einer Komponente einer technischen Anlage anzugeben, mittels welcher ein einfaches Erkennen von kritischen Betriebszuständen möglich ist, um nicht zu früh, aber auch nicht zu spät Gegenmaßnahmen veranlassen zu können.

Des Weiteren soll es mittels der Erfindung möglich sein, insbesondere das Langzeitverhalten einer technischen Anlage überwachen zu können.

Die Aufgabe ist erfindungsgemäß mit einem Verfahren gemäß Anspruch 1 und einer Vorrichtung gemäß Anspruch 4 gelöst.

Die Erfindung geht dabei von der Überlegung aus, dass beim Betrieb einer technischen Anlage zumindest zeitweilig auch solche Betriebszustände von Anlagenkomponenten toleriert werden können, welche an sich unerwünscht oder sogar gefährlich sind, beispielsweise der Betrieb eines Generators oder einer Pumpe oberhalb deren Nennleistung.

Üblicherweise ist eine technische Anlage für einen bestimmten Nennbetrieb ausgelegt, jedoch sind praktisch immer Sicherheitsreserven vorhanden. Deshalb wäre ein sofortiges Abschalten der technischen Anlage nach einer Überschreitung eines Grenzwerts sehr unwirtschaftlich.

Andererseits stellt ein zu langes Überschreiten einer Nennbeanspruchung einer Komponente der technischen Anlage eine Gefährdung dar.

Daher ist bei einem erfindungsgemäßen Verfahren eine Erweiterung der Datensätze um Informationen vorgesehen, welche die Art des Betriebszustands und dessen zeitliche Dauer charakterisieren. Bei der Art des Betriebszustand kann es sich beispielsweise um Informationen wie "Kühlmittelpumpe 125 % Überdrehzahl" etc. handeln.

Erfindungsgemäß wird bzw. ist ferner ein aktueller Wert der Dauer des Betriebszustands mit einer zulässigen Maximaldauer bezüglich der betreffenden Art des Betriebszustands verglichen.

Beispielsweise kann die vorgenannte Betriebszustandsart für die Kühlmittelpumpe für z.B. 30 Min. toleriert werden, ohne dass eine dauerhafte Beschädigung dieser Pumpe zu befürchten ist. Daher wird bei dieser Ausführungsform die Dauer des an sich nicht gewünschten Betriebszustands ermittelt und mit einer zulässigen Maximaldauer verglichen.

In einer weiteren vorteilhaften Ausgestaltung tritt ein Betriebszustand während des Betriebs mehrmals auf und die zeitliche Dauer wird kumulativ ermittelt.

Bei dieser Ausführungsform der Erfindung wird davon ausgegangen, dass nicht die jeweilige Dauer des ununterbrochenen Auftretens eines bestimmten Betriebszustands ein Maß für eine Gefährdung der betreffenden Anlagenkomponente ist, sondern dessen Gesamtdauer als Summe der mehrmaligen Auftrittsdauern.

Hierbei wird während des Betriebs die Gesamtdauer eines bestimmten Betriebszustands ermittelt, welcher verteilt auf mehrere Zeitabschnitte und üblicherweise unterbrochen durch andere Betriebszustände auftritt.

Beispielsweise kann ein Motor gerechnet über seine Gesamtlebensdauer z.B. 5 Mio. Umdrehungen bei Überlast tolerieren. Dabei geht man z.B. davon aus, dass eine Anlagenkomponente einer schleichenden Verschlechterung unterworfen ist, jedes mal wenn sie außerhalb ihres Nennbetriebs betrieben wird. Daher wird bei dieser Ausführungsform bei jedem erneuten Auftreten desselben Betriebszustands die bisher ermittelte, kumulierte Zeitdauer dieses Betriebszustands als Anfangswert verwendet.

In einer alternativen Ausführung tritt ein Betriebszustand während des Betriebs mehrmals auf und die zeitliche Dauer wird von jedem erneuten Auftreten an neu ermittelt.

Im Gegensatz zur zuvor angeführten Ausführungsform werden hier solche an sich unerwünschten Betriebszustände betrachtet, nach deren Beendigung eine vollständige Regeneration der belasteten Anlagenkomponente zu erwarten ist, falls die Zeitdauer nicht zu groß ist.

Beispielsweise erhitzt sich ein zu stark belastetes Generatorlager während seines Betriebs in Überlast, jedoch findet eine vollständige Rückbildung der übermäßigen Erwärmung statt, sobald der Generator wieder in Nennlast betrieben wird; bei nicht übermäßig starker Überbeanspruchung sind keine bleibenden oder schleichenden Beschädigungen des Generators zu befürchten.

Daher ist bei dieser Ausführungsform vorgesehen, lediglich die ununterbrochene Dauer des Vorherrschens eines bestimmten Betriebszustands zu ermitteln, wobei bei einem erneuten Auftreten desselben Betriebszustands nach vorheriger Unterbrechung durch einen anderen Betriebszustand die zeitliche Dauer beginnend von Null an neu ermittelt wird. Es findet somit im Gegensatz zur vorangehenden Ausführungsform keine Berücksichtigung eines Anfangswerts für die zeitliche Dauer statt.

Diese Ausführungsform ist daher besonders zur Erkennung von solchen Betriebszuständen geeignet, welche zu einer akuten Gefährdung einer Anlagenkomponente führen, wenn derartige Betriebszustände ununterbrochen und für zu lange Zeit vorherrschen.

Bevorzugt umfasst die erfindungsgemäße Vorrichtung weiterhin Mittel, mittels welcher die zeitliche Dauer kumulativ ermittelbar ist.

Alternativ umfasst die Vorrichtung weiterhin Mittel, mittels welcher die zeitliche Dauer von jedem erneuten Auftreten des Betriebszustands an neu ermittelbar ist.

Im Folgenden wird ein Ausführungsbeispiel der Erfindung näher dargestellt. Es zeigt:
FIG eine erfindungsgemäße Vorrichtung.

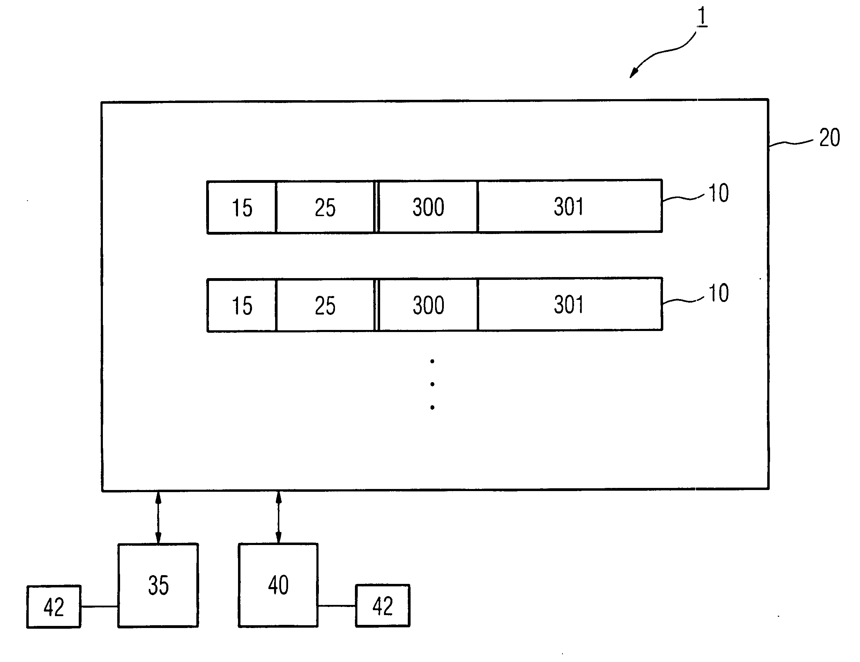

In der Figur ist eine Vorrichtung 1 zur Überwachung des Betriebszustands mindestens einer nicht näher dargestellten Komponente einer technischen Anlage dargestellt.

Während des Betriebs werden Messdaten 25 bezüglich der Komponente erfasst und mit einem Zeitstempel 15 versehen, welcher Auskunft über den Zeitpunkt gibt, zu welchem die Messdaten angefallen sind. Die Messdaten 25, der Zeitstempel 15 und weitere Datenfelder 300 und 301 werden als Datensatz 10 in einem Datenspeicher 20 abgelegt.

Das Datenfeld 300 enthält Informationen darüber, welche Art von Betriebszustand die Messdaten 25 zu Zeitpunkt des Zeitstempels 15 charakterisieren, ob es sich beispielsweise um einen normalen, erwünschten oder irrregulären und unerwünschten Betriebszustand handelt. Das Datenfeld 301 enthält Informationen bezüglich der Zeitdauer, während welcher der im Datenfeld 300 charakterisierte Betriebszustand aufgetreten ist.

Jeder Datensatz 10 beschreibt folglich zu einem bestimmten Zeitpunkt entsprechend des Werts des Zeitstempels 15 einen bestimmten Betriebszustand einer Anlagenkomponente.

Ein Integrator 35 und ein Summierer 40 sind alternativ oder in Kombination verfügbar, um die Information bezüglich der zeitlichen Dauer der Betriebszustände zu ermitteln.

Soll die zeitliche Dauer eines mehrfach auftretenden, durch andere Betriebszustände unterbrochenen Betriebszustands nicht kumulativ, sondern ohne Anfangswert ermittelt werden, so sind Rückstelleinrichtungen 42 vorhanden, mittels welcher der Integrator 35 und/oder der Summierer 40 beim erneuten Auftreten desselben Betriebszustands auf Null rückgesetzt werden können.

Die im Datenfeld 301 des Datensatzes 10 hinterlegte Zeitinformation kann zur Ermittlung ggf. notwendiger Schutzhandlungen mit einer vorgegebenen zulässigen Maximaldauer des betreffenden Betriebszustands verglichen werden.

Meist liegen bei einer technischen Anlage bereits eine Fülle von Messdaten 25 vor, welche in Form von Datensätzen 10 den Betriebszustand der technischen Anlage beschreiben.

Diese Datensätze 10 beinhalten weiterhin Zeitstempel 15 als Information über den Zeitpunkt, zu welchem die Messdaten 25angefallen sind.

Die Datensätze 10 können nun so erweitert werden, dass sie zusätzlich zu den Messinformationen der Messdaten 25 und deren Zeitpunkt des Anfallens der Informationen darüber enthalten, welcher Betriebszustand zu diesen Messdaten 25 korrespondiert und während welcher zeitlichen Dauer dieser Betriebszustand aufgetreten ist, entweder als kumulierte Zeitdauer oder alternativ als individuelle Zeitdauer berechnet ohne Anfangswert.

Die Ermittlung der Zeitdauer des Betriebszustands kann beispielsweise dadurch erfolgen, dass ausgehend von einem aktuellen Datensatz 10, welcher zu einem bestimmten Betriebszustand korrespondiert, derjenige am kürzesten zeitlich zurückliegende Datensatz ermittelt wird, welcher zum selben Betriebszustand korrespondiert.

Das Datenfeld 301 des aktuellen Datensatzes 10 kann dann vom Datenfeld 301 des vorgenannten zeitlich zurückliegenden Datensatzes als Anfangswert die Zeitinformation auslesen, welche nun kumulativ weiter gezählt wird, bis der Betriebszustand wechselt. Analog wird vorgegangen, sobald der betrachtete Betriebszustand erneut auftritt.

Sollten infolge der lediglich zu Abtastzeitpunkten vorgenommenen Messungen zeitlich aufeinander folgende Datensätze 10 zum selben Betriebszustand korrespondieren, so kann die Zeitinformation im Datenfeld 301 des aktuellen Datensatz sehr leicht ermittelt werden, indem die Zeitinformation im unmittelbar zurückliegenden Datensatz erhöht wird um die Differenz des Werts der Zeitstempel 15 bezüglich des aktuellen und des unmittelbar zurückliegenden Datensatzes; der zeitliche zurückliegende Datensatz kann also beispielsweise zunächst kopiert, mit dem neuen Zeitstempel versehen und anschließend durch die genannte Korrektur der Zeitdauer aktualisiert werden.

Wird nun der aktuelle Betriebszustand von einem anderen Betriebszustand abgelöst, so wird der kumulierte Zeitwert im Datenfeld 301 festgehalten und beim erneuten Auftretend desselben Betriebszustands als Anfangswert bei der Ermittlung der Zeitdauer verwendet.

Im Unterschied dazu wird bei einer alternativen Ausführung, bei welcher lediglich eine individuelle Zeitdauer ohne Anfangswert ermittelt werden soll, der Inhalt des Datenfelds 301 nach der oben genannten Kopie auf Null gesetzt, sobald der Betriebszustand wechselt.

Die Datenfelder 300 und 301 müssen nicht in Art einer festen Zuordnung an die Messdaten 25 und die zugehörigen Zeitstempel 15 geknüpft sein. Sie können auch selbständige Datensätze darstellen mit eigenem Zeitstempel.

## Patentansprüche

1. Verfahren zur Überwachung des Betriebszustands mindestens einer Komponente einer technischen Anlage, wobei Messdaten (25) bezüglich der Komponente während des Betriebs laufend erfasst und als mit je einem Zeitstempel (15) versehene Datensätze (10) gespeichert werden, **dadurch gekennzeichnet, dass** in den Datensätzen (10) weiterhin Informationen bezüglich der Art und zeitlichen Dauer des Betriebszustandes gespeichert werden sowie ein in den Datensätzen (10) gespeicherter aktueller Wert der Dauer des Betriebszustands mit einer zulässigen Maximaldauer bezüglich der betreffenden Art des Betriebszustands verglichen wird.

2. Verfahren nach Anspruch 1,
**dadurch gekennzeichnet, dass** ein Betriebszustand während des Betriebs mehrmals auftritt und die zeitliche Dauer kumulativ ermittelt wird.

3. Verfahren nach Anspruch 1,
**dadurch gekennzeichnet, dass** ein Betriebszustand während des Betriebs mehrmals auftritt und die zeitliche Dauer von jedem erneuten Auftreten an neu ermittelt wird.

4. Vorrichtung (1) zur Überwachung des Betriebszustands mindestens einer Komponente einer technischen Anlage, bei der Messdaten (25) bezüglich der Komponente während des Betriebs laufend erfasst und als mit je einem Zeitstempel (15) versehene Datensätze (10) in einem Datenspeicher (20) abgelegt sind, **dadurch gekennzeichnet, dass** die Datensätze (10) weiterhin Datenfelder (300,301) zur Speicherung der Art und zeitlichen Dauer des Betriebszustands aufweisen sowie Mittel zum Vergleichen eines in den Datensätzen (10) gespeicherten Wertes der Dauer des Betriebszustands mit einer zulässigen Maximaldauer bezüglich der betreffenden Art des Betriebszustands vorgesehen sind.

5. Vorrichtung (1) nach Anspruch 4,
**dadurch gekennzeichnet, dass** die Vorrichtung (1) weiterhin Mittel (35,40) umfasst, mittels welcher die zeitliche Dauer kumulativ ermittelbar ist.

6. Vorrichtung (1) nach Anspruch 4,
**dadurch gekennzeichnet, dass** die Vorrichtung weiterhin Mittel (35,40,42) umfasst, mittels welcher die zeitliche Dauer von jedem erneuten Auftreten des Betriebszustands an neu ermittelbar ist.

## Claims

1. Method for monitoring the operating state of at least one component of a technical system, wherein measured data (25) relating to the component are continuously recorded during operation and are stored in the form of data records (10) each provided with a timestamp (15), **characterized in that** furthermore information relating to the type and duration of the operating state is stored in the data records (10) and a current value of the duration of the operating state stored in the data records (10) is compared with a permissible maximum duration relating to the type of operating state concerned.

2. Method according to Claim 1, **characterized in that** an operating state occurs several times during operation and the duration is determined cumulatively.

3. Method according to Claim 1, **characterized in that** an operating state occurs several times during operation and the duration is re-determined from each new occurrence.

4. Device (1) for monitoring the operating state of at least one component of a technical system, with which measured data (25) relating to the component are continuously recorded during operation and are stored in a data memory (20) in the form of data records (10) each provided with a timestamp (15), **characterized in that** the data records (10) furthermore have data fields (300, 301) for storing the type and duration of the operating state, and means for comparing a value of the duration of the operating state stored in the data records (10) with a permissible maximum duration relating to the type of operating state concerned.

5. Device (1) according to Claim 4, **characterized in that** the device (1) furthermore has means (35, 40), by means of which the duration can be determined cumulatively.

6. Device (1) according to Claim 4, **characterized in that** the device furthermore has means (35, 40, 42), by means of which the duration can be re-determined from each new occurrence of the operating state.

## Revendications

1. Procédé pour la surveillance de l'état de fonctionnement d'au moins un composant d'une installation technique, des données de mesure (25) concernant le composant étant détectées en continu pendant le fonctionnement et étant mémorisées comme ensembles de données (10) munis chacun d'un tampon horodateur (15), **caractérisé par le fait que** l'on mémorise aussi dans les ensembles de données (10) des informations concernant le type et la durée de l'état de fonctionnement et que l'on compare une valeur actuelle, mémorisée dans les ensembles de données (10), de la durée de l'état de fonctionnement à une durée maximale autorisée par rapport au type concerné de l'état de fonctionnement.

2. Procédé selon la revendication 1, **caractérisé par le fait qu'**un état de fonctionnement apparaît plusieurs fois pendant le fonctionnement et que l'on détermine alors la durée par cumul.

3. Procédé selon la revendication 1, **caractérisé par le fait qu'**un état de fonctionnement apparaît plusieurs fois pendant le fonctionnement et que l'on détermine à nouveau la durée à chaque nouvelle apparition.

4. Dispositif (1) pour la surveillance de l'état de fonctionnement d'au moins un composant d'une installation technique, dans lequel des données de mesure (25) concernant le composant sont détectées en continu pendant le fonctionnement et sont mémorisées comme ensembles de données (10) munis chacun d'un tampon horodateur (15) dans une mémoire de données (20), **caractérisé par le fait que** les ensembles de données (10) comportent aussi des champs de données (300, 301) pour la mémorisation du type et de la durée de l'état de fonctionnement et que des moyens sont prévus pour la comparaison d'une valeur, mémorisée dans les ensembles de données (10), de la durée de l'état de fonctionnement à une durée maximale autorisée par rapport au type concerné de l'état de fonctionnement.

5. Dispositif (1) selon la revendication 4, **caractérisé par le fait que** le dispositif (1) comprend aussi des moyens (35, 40) avec lesquels la durée peut être déterminée par cumul.

6. Dispositif (1) selon la revendication 4, **caractérisé par le fait que** le dispositif comprend aussi des moyens (35, 40, 42) avec lesquels la durée de chaque nouvelle apparition de l'état de fonctionnement peut être déterminée à nouveau.
